(19) **Europäisches Patentamt**
**European Patent Office**
**Office européen des brevets**

(11) **EP 2 571 728 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **11730921.1**

(22) Anmeldetag: **17.05.2011**

(51) Int Cl.:
***B60R 16/03*** *(2006.01)*  ***H02J 1/14*** *(2006.01)*

(86) Internationale Anmeldenummer:
**PCT/EP2011/057967**

(87) Internationale Veröffentlichungsnummer:
**WO 2011/144612 (24.11.2011 Gazette 2011/47)**

(54) **VERFAHREN UND VORRICHTUNG ZUM BETREIBEN EINES KRAFTFAHRZEUGS**

METHOD AND DEVICE FOR OPERATING A MOTOR VEHICLE

PROCÉDÉ ET DISPOSITIF POUR FAIRE FONCTIONNER UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2010 DE 102010029115**

(43) Veröffentlichungstag der Anmeldung:
**27.03.2013 Patentblatt 2013/13**

(73) Patentinhaber: **Bayerische Motoren Werke Aktiengesellschaft**
**80809 München (DE)**

(72) Erfinder:
- **STAUNER, Thomas**
  **85716 Unterschleissheim (DE)**
- **NAGY, Roman**
  **82008 Unterhaching (DE)**
- **FRÖSCHL, Joachim**
  **82211 Herrsching (DE)**
- **HATTENKOFER, Martin**
  **84164 Moosthenning (DE)**
- **WANKE, Christoph**
  **86415 Mering (DE)**

(56) Entgegenhaltungen:
**EP-A1- 1 103 426    DE-A1- 10 211 970
DE-C1- 3 936 638**

**Beschreibung**

Die Erfindung betrifft ein Verfahren zum Betreiben eines Kraftfahrzeugs bei dem eine Leistungsaufnahme eines elektrischen Verbrauchers des Kraftfahrzeugs gesteuert wird.

Aufgrund eines wachsenden Umweltbewusstseins wird für Nutzer von Kraftfahrzeugen ein niedriger Energieverbrauch immer wichtiger. Ein wesentlicher Gesichtspunkt ist hierbei eine effiziente Energienutzung.

DE 102 11 970 A1 offenbart ein Verfahren zur Anpassung eines Leistungsbedarfs mehrerer elektrischer Verbraucher in Kraftfahrzeugbordnetzen. Zur Steuerung einer Leistungsaufnahme mehrerer Verbraucher wird jedem dieser Verbraucher ständig eine Information über die gesamte jeweils zur Verfügung stehende elektrische Leistung zur Verfügung gestellt.

Aus der DE 39 36 638 C1 ist ein Verfahren zum Betreiben eines Kraftfahrzeugs, bei dem ein Gewichtungswert ermittelt wird und abhängig davon eine Leistungsaufnahme des elektrischen Verbrauchers gesteuert wird, bekannt.

Aus der EP 1103426 A ist eine Bewertung von Verbrauchern unter Verwendung von Bewertungszahlen bekannt. Die Bewertungszahlen stellen lediglich einen zu vermeidenden Leistungsbereich dar.

Die Aufgabe, die der Erfindung zugrunde liegt, ist ein Verfahren zum Betreiben eines Kraftfahrzeugs zu schaffen, das eine effiziente Energienutzung unterstützt.

Die Aufgabe wird gelöst durch die Merkmale des unabhängigen Patentanspruchs. Vorteilhafte Ausgestaltungen sind in den Unteransprüchen gekennzeichnet.

Die Erfindung zeichnet sich aus durch ein Verfahren zum Betreiben eines Kraftfahrzeugs bei dem durch einen Fahrzeugnutzer beeinflusst zumindest ein Gewichtungswert ermittelt wird, wobei mittels des Gewichtungswerts spezifische Eigenschaften des Kraftfahrzeugs beeinflussbar sind. Abhängig von dem Gewichtungswert wird eine freigegebene maximale Leistung, die ein vorgegebener elektrischer Verbraucher des Kraftfahrzeugs aufnehmen darf, ermittelt. Abhängig von der freigegebenen maximalen Leistung wird eine Leistungsaufnahme des elektrischen Verbrauchers gesteuert.

Dies ermöglicht, dass ein Fahrzeugnutzer einen Leistungsverbrauch eines oder mehrerer elektrischer Verbraucher beeinflussen kann und dabei insbesondere Bedürfnisse des Fahrzeugnutzers berücksichtigt werden können. Vorteilhafterweise kann dies einen Beitrag leisten dazu, dass Energie im Kraftfahrzeug effizienter genutzt wird.

Mittels des Gewichtungswertes kann der Fahrzeugnutzer spezifische Eigenschaften des Kraftfahrzeugs beeinflussen. Der Gewichtungswert kann beispielsweise repräsentativ sein für eine Komforteigenschaft des Kraftfahrzeugs und/oder eine Sportlichkeit und/oder eine Reichweite des Kraftfahrzeugs. Bei einer vorgegebenen Menge von elektrischen Verbrauchern des Kraftfahrzeugs kann abhängig von dem Gewichtungswert oder den Gewichtungswerten ein spezifischer Verbraucher in seiner Bedeutung für den Fahrzeugnutzer als wichtig oder weniger wichtig eingestuft werden. Ein geringer Gewichtungswert, der beispielsweise repräsentativ ist für die Komforteigenschaft des Kraftfahrzeugs, hat beispielsweise zur Folge, dass beispielsweise einer Sitzheizung und/oder einer Klimaanlage weniger Leistung zur Verfügung gestellt wird im Vergleich zu einem Fall, bei dem der Gewichtungswert einen höheren Wert aufweist.

Ein Steuern der Leistungsaufnahme des elektrischen Verbrauchers kann mittels einer Kontrolleinrichtung erfolgen, die im Kraftfahrzeug angeordnet ist und die die Leistungsaufnahme jedes Verbrauchers derart steuert, dass die von dem elektrischen Verbraucher verbrauchte Leistung, die ermittelte freigegebene maximale Leistung, die der Verbraucher aufnehmen darf, nicht überschreitet. Alternativ oder zusätzlich ist möglich, dass der elektrische Verbraucher ausgebildet ist, seine Leistungsaufnahme einzustellen abhängig von der für den elektrischen Verbraucher freigegebenen maximalen Leistung.

Gemäß einer vorteilhaften Ausgestaltung wird abhängig von einer Eingabe des Fahrzeugnutzers der Gewichtungswert ermittelt. Dies hat den Vorteil, dass fahrzeugnutzerspezifische Bedürfnisse berücksichtigt werden können. Eine Eingabe kann mittels einer geeignet ausgebildeten Eingabeeinheit erfolgen, beispielsweise mit einem Tastenfeld, das im Fahrzeug angeordnet ist, und/oder mittels eines Sensorbildschirms. Es ist beispielsweise möglich, dass mittels eines Tastenfeldes ein Zahlenwert aus einem vorgegebenen Wertebereich eingeben wird für den jeweiligen Gewichtungswert und/oder beispielsweise Werte durch Berühren des Sensorbildschirms vorgegeben werden. Hierbei ist beispielsweise einer vorgegebenen Position des Sensorbildschirms ein Vektor von Gewichtungswerten zugeordnet und die Dimension des Vektors ist gleich einer vorgegebenen Anzahl von Gewichtungswerten. Es ist auch möglich, dass dem Fahrzeugnutzer eine oder mehrere vorgegebene Standardgewichtungen vorgeschlagen werden und der Fahrzeugführer eine der vorgeschlagenen Standardgewichtungen auswählt.

Gemäß einer weiteren vorteilhaften Ausgestaltung wird mittels eines Verhaltensbeobachters abhängig von mindestens einer Betriebsgröße der Gewichtungswert ermittelt. Die Betriebsgröße kann repräsentativ sein für eine erfasste Messgröße und/oder eine abgeleitete Größe. Die Betriebsgröße kann beispielsweise repräsentativ sein für ein fahrzeugnutzerspezifisches Nutzungsprofil zumindest eines elektrischen Verbrauchers und/oder für einen Fahrstil eines Fahrzeugführers. Vorteilhafterweise ermöglicht dies eine mittelbare Berücksichtigung der Bedürfnisse eines Fahrzeugnutzers beim Ermitteln des Gewichtungswertes oder der Gewichtungswerte.

Gemäß einer weiteren vorteilhaften Ausgestaltung wird abhängig von dem Gewichtungswert ein Zuteilungswert für den elektrischen Verbraucher ermittelt und abhängig von dem Zuteilungswert die freigegebene maximale Leistung, die der Verbraucher aufnehmen darf, ermittelt. Dies ermöglicht ein sehr einfaches Ermitteln der freigegebenen maximalen Leistung und eine einfache Steuerung der Leistungsaufnahme des elektrischen Verbrauchers. Der Zuteilungswert kann einen festen Prozentsatz repräsentieren, so dass beispielsweise dem elektrischen Verbraucher ein fester Prozentsatz, beispielsweise 60%, seiner maximalen Leistung oder seiner Nennleistung oder seiner gewünschten Leistung als freigegebene maximale Leistung zur Verfügung gestellt wird.

Gemäß einer weiteren vorteilhaften Ausgestaltung wird abhängig von dem Gewichtungswert eine Funktionsgröße ermittelt und abhängig von einer vorgegebenen Zuteilungsfunktion und der ermittelten Funktionsgröße für den elektrischen Verbraucher die freigegebene maximale Leistung, die der elektrische Verbraucher aufnehmen darf, ermittelt.

Gemäß einer weiteren vorteilhaften Ausgestaltung wird die freigegebene maximale Leistung abhängig von einer zur Verfügung stehenden elektrischen Gesamtenergie für vorgegebene elektrische Verbraucher des Kraftfahrzeugs ermittelt.

Gemäß einer weiteren vorteilhaften Ausgestaltung ist die Funktionsgröße repräsentativ für eine Summe von einer normierten Funktionsgröße und einem Einstellwert, wobei der Einstellwert abhängig von dem Gewichtungswert ermittelt wird.

Gemäß einer weiteren vorteilhaften Ausgestaltung ist die Funktionsgröße repräsentativ für ein Produkt aus der normierten Funktionsgröße und dem Einstellwert.

Gemäß einer weiteren vorteilhaften Ausgestaltung wird die Zuteilungsfuntiön repräsentiert durch folgende Gleichung:

$$f(x) = 1 - (1 - x)^z$$

Mit

x:  normierte Energieverfügbarkeit
f(x):  normierte freigegebene maximale Leistung
z:  Funktionsgröße

Die Zuteilungsfunktion ermöglicht sowohl eine Energieverfügbarkeit als auch den Gewichtungswert beim Ermitteln der freigegebenen maximalen Leistung eines elektrischen Verbrauchers zu berücksichtigen.

Gemäß einer weiteren vorteilhaften Ausgestaltung wird unter Berücksichtigung zumindest einer Gütefunktion und abhängig von dem Gewichtungswert die freigegebene maximale Leistung, die der elektrische Verbraucher des Kraftfahrzeugs aufnehmen darf, optimiert und abhängig von der optimierten freigegebenen maximalen Leistung wird eine Leistungsaufnahme des elektrischen Verbrauchers gesteuert.

Gemäß einer weiteren vorteilhaften Ausgestaltung wird eine Funktionseinschränkung des elektrischen Verbrauchers ermittelt und optisch und/oder akustisch und/oder haptisch signalisiert. Es ist zusätzlich oder alternativ möglich, dass eine Funktionseinschränkung eines elektrischen Systems, dem mehrere elektrische Verbraucher zugeordnet sind, beispielsweise eines Lenksystems, ermittelt und signalisiert wird. Ein Signalisieren der Funktionseinschränkung des elektrischen Verbrauchers kann mittels einer geeignet ausgebildeten Ausgabeeinheit, beispielsweise einem Display und/oder einer LED-Anzeige, erfolgen. Vörteilhafterweise erhält der Fahrzeugnutzer so eine Information, welcher elektrische Verbraucher und/oder welches elektrische System nur noch eingeschränkt funktionsfähig ist.

Gemäß einer vorteilhaften Ausgestaltung wird ein zusätzlicher und/oder verminderter Energieverbrauch ermittelt im Vergleich zu einem Energieverbrauch, wenn die freigegebene maximale Leistung, die der elektrische Verbraucher des Kraftfahrzeugs aufnehmen darf, abhängig von zu mindestens einem vorgegebenen Soll-Gewichtungswert ermittelt wird. Der zusätzliche und/oder verminderte Energieverbrauch wird optisch und/oder akustisch signalisiert. Vorteilhafterweise erhält der Fahrzeugnutzer so eine Information zu einem Energieverbrauch, abhängig von einem oder mehreren spezifischen Gewichtungswerten, und kann diese Information nutzen für eine Entscheidungsfindung, ob er den oder die spezifischen Gewichtungswerte beibehalten möchte oder nicht. Ein Signalisieren des zusätzlichen und/oder verminderten Energieverbrauchs kann mittels einer geeignet ausgebildeten Ausgabeeinheit, beispielsweise einem Display und/oder einer LED-Anzeige, erfolgen.

Ausführungsbeispiele von Ausgestaltungen der Erfindung sind im Folgenden anhand schematischer Zeichnungen näher erläutert. Es zeigen:

Figur 1    ein Ausführungsbeispiel eines Bedienfeldes 10 einer Eingabeeinheit und

Figur 2    ein Diagramm einer Zuteilungsfunktion f_x für verschiedene Werte einer Funktionsgröße z.

Die Vorrichtung zum Betreiben des Kraftfahrzeugs weist beispielsweise eine Eingabeeinheit, eine Recheneinheit und eine Ausgabeeinheit auf.

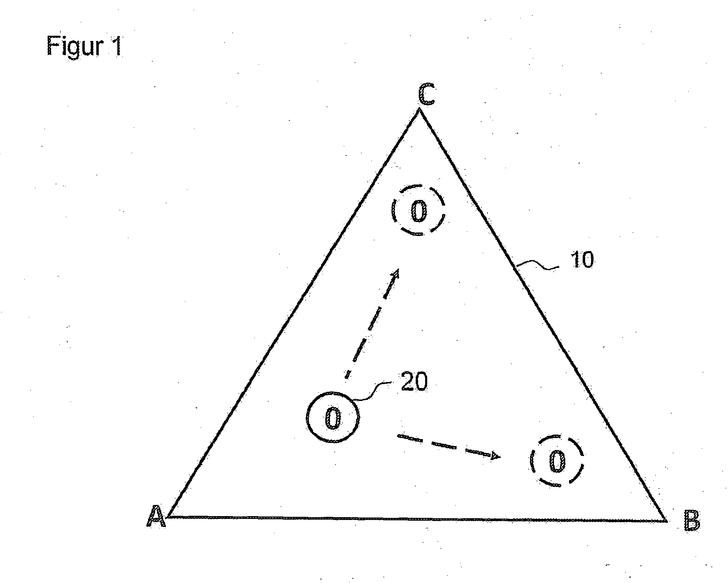

Die Eingabeeinheit weist beispielsweise ein Bedienfeld 10 auf, das als Sensorbildschirm ausgebildet ist. Eine Eingabe durch den Fahrzeugnutzer erfolgt beispielsweise durch Berühren des Sensorbildschirms an einer gewünschten Position und/oder durch verschieben eines markierten Feldes 20 in die gewünschte Position. Das Bedienfeld weist eine geometrische Form mit mehreren Ecken auf, wobei eine Anzahl der Ecken gleich ist einer Anzahl von Gewichtungswerten. Die Ecken sind beispielsweise kreisförmig in 360 Grad gleichmäßig verteilt angeordnet. Das in Figur 1 gezeigte Bedienfeld 10 weist drei Ecken auf. Es ist alternativ auch möglich, dass das Bedienfeld 10 vier oder mehr Ecken aufweist. Jeder Ecke des Bedienfeldes 10 ist eine Eigenschaft des Kraftfahrzeugs zugeordnet. Beispielsweise ist einer ersten Ecke A eine Komforteigenschaft zugeordnet, einer zweiten Ecke B eine Sportlichkeit und einer dritten Ecke C eine Reichweite des Kraftfahrzeugs. Jeder Position des Bedienfeldes 10 ist beispielsweise ein Vektor von Gewichtungswerten zugeordnet. Die Anzahl der Gewichtungswerte ist in diesem Fall gleich drei. Beispielsweise sind ein erster Gewichtungswert repräsentativ für die Komforteigenschaft, ein zweiter Gewichtungswert repräsentativ für die Sportlichkeit und ein dritter Gewichtungswert repräsentativ für die Reichweite. Beispielsweise kann der erste Gewichtungswert, der repräsentativ ist für die Komforteigenschaft, ermittelt werden abhängig von einem Abstand einer Berührposition von der ersten Ecke A, der die Komforteigenschaft zugeordnet ist.

Alternativ oder zusätzlich kann eine Eingabe mittels eines Tastenfeldes erfolgen, wobei beispielsweise ein Zahlenwert aus einem vorgegebenen Wertebereich eingeben wird für den jeweiligen Gewichtungswert.

An Stelle der Eingabeeinheit kann die Vorrichtung zum Betreiben des Kraftfahrzeugs einen Verhaltensbeobachter aufweisen, der ausgebildet ist, abhängig von mindestens einer Betriebsgröße den Gewichtungswert zu ermitteln.

Die Recheneinheit kann beispielsweise ausgebildet sein, abhängig von dem Gewichtungswert, der abhängig von einer Eingabe des Fahrzeugnutzers oder mittels des Verhaltensbeobachter ermittelt wird, eine freigegebene maximale Leistung, die ein vorgegebener elektrischer Verbraucher des Kraftfahrzeugs aufnehmen darf, zu ermitteln. Beispielsweise kann die Recheneinheit ausgebildet sein, abhängig von dem Gewichtungswert oder den Gewichtungswerten eine Funktionsgröße z zu ermitteln und abhängig von einer vorgegebenen Zuteilungsfunktion f_x und der ermittelten Funktionsgröße z für den elektrischen Verbraucher die freigegebene maximale Leistung, die der elektrische Verbraucher aufnehmen darf, zu ermitteln.

Die Zuteilungsfunktion f_x kann beispielsweise mit folgender Gleichung dargestellt werden:

$$f(x) = 1 - (1 - x)^z$$

Mit

x:       normierte Energieverfügbarkeit
f(x):    normierte freigegebene maximale Leistung
z:       Funktionsgröße

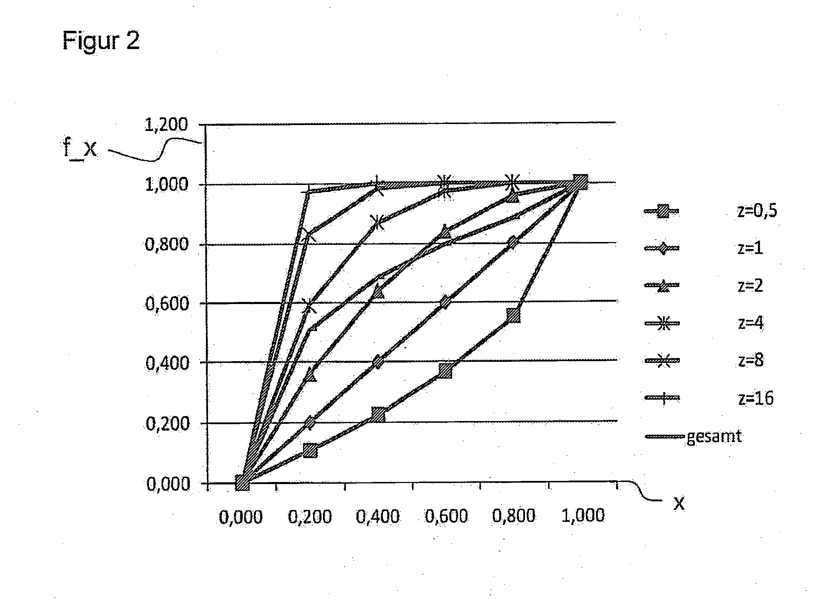

Figur 2 zeigt mehrere Verläufe der Zuteilungsfunktion f_x abhängig von der Funktionsgröße z, die beispielsweise für jeweils einen vorgegebenen elektrischen Verbraucher, ermittelt wird. Ein erster Verlauf der Zuteilungsfunktion f_x repräsentiert beispielsweise einen ersten Verlauf der normierten freigegebenen maximalen Leistung für einen ersten elektrischen Verbraucher mit einer spezifischen Funktionsgröße z, beispielsweise z = 0,5, Abhängig von einer normierten Energieverfügbarkeit x. Die Funktionsgröße z beeinflusst den Verlauf der Zuteilungsfunktion f_x. Für kleine Werte der Funktionsgröße z, beispielsweise z < 1, reduziert sich bei einer Reduzierung einer verfügbaren Energiemenge die normierte freigegebene maximale Leistung für den elektrischen Verbraucher wesentlich stärker als bei einem großen Wert für die Funktionsgröße z, zum Beispiel z > 10.

Alternativ ist beispielsweise möglich, dass die Recheneinheit ausgebildet ist, abhängig von dem Gewichtungswert oder den Gewichtungswerten einen Zuteilungswert für den elektrischen Verbraucher zu ermitteln und abhängig von dem Zuteilungswert die freigegebene maximale Leistung, die der Verbraucher aufnehmen darf, zu ermitteln. Eine weitere Alternative ist beispielsweise, dass die Recheneinheit ausgebildet ist, unter Berücksichtigung zumindest einer Gütefunktion und abhängig von dem Gewichtungswert oder den Gewichtungswerten die freigegebene maximale Leistung, die der elektrische Verbraucher des Kraftfahrzeugs aufnehmen darf, zu optimieren und abhängig von der optimierten freigegebenen maximalen Leistung eine Leistungsaufnahme des elektrischen Verbrauchers zu steuern.

Die Recheneinheit kann ausgebildet sein, eine Funktionseinschränkung des elektrischen Verbrauchers zu ermitteln und/oder einen zusätzlichen und/oder verminderten Energieverbrauch zu ermitteln im Vergleich zu einem Energieverbrauch, wenn die freigegebene maximale Leistung, die der elektrische Verbraucher des Kraftfahrzeugs aufnehmen darf, abhängig von zu mindestens einem vorgegebenen Soll-Gewichtungswert ermittelt wird. Ein Signalisieren der ermittelten Funktionseinschränkung des elektrischen Verbrauchers und/oder eines elektrischen Systems und/oder das Signalisieren des zusätzlichen und/oder verminderten Energieverbrauchs kann beispielsweise jeweils mit der Ausgabeeinheit erfolgen. Die Ausgabeeinheit kann beispielsweise als Display und/oder LED-Anzeige ausgebildet sein. Zur Anzeige können beispielsweise zumindest ein Balkendiagramm und/oder Halbkreisdiagramm eingesetzt werden. Eine farbliche Anzeige des Balkendiagramms und/oder des Halbkreisdiagramms kann beispielsweise so gewählt werden, dass ein Fahrzeugnutzer anhand der Farbe und/oder der Farben erkennen kann, ob es sich um ein Informationssignal oder um ein Warnsignal handelt.

Zusätzlich oder alternativ können auch beispielsweise eine aktuelle maximale Reichweite des Kraftfahrzeugs und/oder eine Antriebsleistung eines Motors angezeigt werden.

Ein Steuern der Leistungsaufnahme des jeweiligen elektrischen Verbrauchers kann beispielsweise derart erfolgen, dass der jeweilige elektrische Verbraucher ausgebildet ist, seine Leistungsaufnahme einzustellen abhängig von der für ihn freigegebenen maximalen Leistung.

Bezugszeichenliste

| 10 | Bedienfeld |
| 20 | markiertes Feld |
| A | erste Ecke |
| B | zweite Ecke |
| C | dritte Ecke |
| f_x | Zuteilungsfunktion |
| x | normierte Energieverfügbarkeit |
| z | Funktionsgröße |

**Patentansprüche**

1. Verfahren zum Betreiben eines Kraftfahrzeugs, bei dem

   - durch einen Fahrzeugnutzer beeinflusst zumindest ein Gewichtungswert ermittelt wird, wobei mittels des Gewichtungswerts spezifische Eigenschaften des Kraftfahrzeugs beeinflussbar sind,
   - abhängig von dem Gewichtungswert eine freigegebene maximale Leistung, die ein vorgegebener elektrischer Verbraucher des Kraftfahrzeugs aufnehmen darf, ermittelt wird, und
   - abhängig von der freigegebenen maximalen Leistung eine Leistungsaufnahme des elektrischen Verbrauchers gesteuert wird.

2. Verfahren nach Anspruch 1, bei dem abhängig von einer Eingabe des Fahrzeugnutzers der Gewichtungswert ermittelt wird.

3. Verfahren nach einem der Ansprüche 1, bei dem mittels eines Verhaltensbeobachters abhängig von mindestens einer Betriebsgröße der Gewichtungswert ermittelt wird.

4. Verfahren nach einem der Ansprüche 1 bis 3, bei dem

   - abhängig von dem Gewichtungswert ein Zuteilungswert für den elektrischen Verbraucher ermittelt wird und
   - abhängig von dem Zuteilungswert die freigegebene maximale Leistung, die der Verbraucher aufnehmen darf, ermittelt wird.

5. Verfahren nach einem der Ansprüche 1 bis 3, bei dem

   - abhängig von dem Gewichtungswert eine Funktionsgröße (z) ermittelt wird und
   - abhängig von einer vorgegebenen Zuteilungsfunktion (f_x) und der ermittelten Funktionsgröße (z) für den elektrischen Verbraucher die freigegebene maximale Leistung, die der elektrische Verbraucher aufnehmen darf, ermittelt wird.

6. Verfahren nach Anspruch 5, bei dem die freigegebene maximale Leistung abhängig von einer zur Verfügung stehenden elektrischen Gesamtenergie für vorgegebene elektrische Verbraucher des Kraftfahrzeugs ermittelt wird.

7. Verfahren nach einem der Ansprüche 5 bis 6, bei dem die Funktionsgröße (z) repräsentativ ist für eine Summe von einer normierten Funktionsgröße und einem Einstellwert, wobei der Einstellwert abhängig von dem Gewichtungswert ermittelt wird.

8. Verfahren nach einem der Ansprüche 5 bis 6, bei dem die Funktionsgröße (z) repräsentativ ist für ein Produkt aus der normierten Funktionsgröße und dem Einstellwert.

9. Verfahren nach einem der Ansprüche 5 bis 8, bei dem die Zuteilungsfunktion (f_x) repräsentiert wird durch folgende Gleichung:

$$f(x) = 1 - (1-x)^{z}$$

Mit

x: normierte Energieverfügbarkeit
f(x): normierte freigegebene maximale Leistung
z: Funktionsgröße

10. Verfahren nach einem der Ansprüche 1 bis 3, bei dem

   - unter Berücksichtigung zumindest einer Gütefunktion und abhängig von dem Gewichtungswert die freigegebene maximale Leistung, die der elektrische Verbraucher des Kraftfahrzeugs aufnehmen darf, optimiert wird und
   - abhängig von der optimierten freigegebenen maximalen Leistung eine Leistungsaufnahme des elektrischen Verbrauchers gesteuert wird.

11. Verfahren nach einem der vorstehenden Ansprüche, bei dem eine Funktionseinschränkung des elektrischen Verbrauchers ermittelt und optisch und/oder akustisch und/oder haptisch signalisiert wird.

**12.** Verfahren nach einem der vorstehenden Ansprüche, bei dem

- ein zusätzlicher und/oder verminderter Energieverbrauch ermittelt wird im Vergleich zu einem Energieverbrauch, wenn die freigegebene maximale Leistung, die der elektrische Verbraucher des Kraftfahrzeugs aufnehmen darf, abhängig von zu mindestens einem vorgegebenen Soll-Gewichtungswert ermittelt wird, und
- der zusätzliche und/oder verminderte Energieverbrauch optisch und/oder akustisch signalisiert wird.

**Claims**

**1.** A method for operating a motor vehicle, wherein

- at least one weighting value is determined in a manner influenced by a vehicle user, wherein specific properties of the motor vehicle can be influenced by means of the weighting value,
- a released maximum power, which a predetermined electric consumer of the vehicle may consume, is determined depending on the weighting value, and
- a power consumption of the electric consumer is controlled depending on the released maximum power.

**2.** A method according to claim 1, wherein the weighting value is determined depending on an input of the vehicle user.

**3.** A method according to claim 1, wherein the weighting value is determined by means of a performance monitor, depending on at least one operating variable.

**4.** A method according to any one of claims 1 to 3, wherein

- an allocation value for the electric consumer is determined depending on the weighting value and
- the released maximum power, which the consumer may consume, is determined depending on the allocation value.

**5.** A method according to any one of claims 1 to 3, wherein

- a functional variable (z) is determined depending on the weighting value and
- the released maximum power, which the electric consumer may consume, is determined depending on a predetermined allocation function (f_x) and the determined functional variable (z) for the electric consumer.

**6.** A method according to claim 5, wherein the released maximum power is determined depending on an available total electric energy for predetermined electric consumers of the motor vehicle.

**7.** A method according to either of claims 5 or 6, wherein the functional variable (z) is representative of a sum of a standardised functional variable and an adjustment value, wherein the adjustment value is determined depending on the weighting value.

**8.** A method according to either of claims 5 or 6, wherein the functional variable (z) is representative of a product from the standardised functional variable and the adjustment value.

**9.** A method according to any one of claims 5 to 8, wherein the allocation function (f_x) is represented by the following equation:

$$f(x) = 1 - (1 - x)^{Z}$$

wherein

x: standardised energy availability
f(x): standardised released maximum power
z: functional variable

**10.** A method according to any one of claims 1 to 3, wherein

- the released maximum power, which the electric consumer of the motor vehicle may consume, is optimised taking into account at least one quality function and depending on the weighting value and
- a power consumption of the electric consumer is controlled depending on the optimised released maximum power.

**11.** A method according to any one of the preceding claims, wherein a functional restriction of the electric consumer is determined and signalled optically and/or acoustically and/or haptically.

**12.** A method according to any one of the preceding claims, wherein

- an additional and/or reduced energy consumption is determined in comparison to an energy consumption when the released maximum power, which the electric consumer of the motor vehicle may consume, is determined depending on at least one predetermined desired weighting value, and
- the additional and/or reduced energy consumption is signalled optically and/or acoustically.

## Revendications

1. Procédé de gestion d'un véhicule selon lequel :

   - on détermine au moins une valeur de pondération sous l'action d'un utilisateur du véhicule, cette valeur de pondération ayant une action sur des caractéristiques spécifiques du véhicule,
   - en fonction de la valeur de pondération on détermine la puissance maximum libérée devant être absorbée par un consommateur électrique prédéfini du véhicule, et
   - en fonction de la puissance maximum libérée, on commande la puissance absorbée par le consommateur électrique.

2. Procédé conforme à la revendication 1, selon lequel on détermine la valeur de pondération en fonction d'une demande de l'utilisateur du véhicule.

3. Procédé conforme à l'une des revendications 1 et 2, selon lequel on détermine la valeur de pondération au moyen d'un observateur du comportement en fonction d'au moins une grandeur de fonctionnement.

4. Procédé conforme à l'une des revendications 1 à 3, selon lequel

   - en fonction de la valeur de pondération, on détermine une valeur de distribution pour le consommateur électrique, et
   - en fonction de la valeur de distribution on détermine la puissance maximum libérée que doit absorber le consommateur.

5. Procédé conforme à l'une des revendications 1 à 3, selon lequel

   - en fonction de la valeur de pondération, on détermine une grandeur fonctionnelle (z), et
   - en fonction d'une fonction de distribution prédéfinie (f_x) et de la grandeur fonctionnelle déterminée (z) pour le consommateur électrique, on détermine la puissance maximum libérée que doit absorber le consommateur électrique.

6. Procédé conforme à la revendication 5, selon lequel la puissance maximum libérée est déterminée en fonction de l'énergie électrique totale à disposition pour le consommateur électrique prédéfini du véhicule.

7. Procédé conforme à l'une des revendications 5 et 6, selon lequel la grandeur fonctionnelle (z) est représentative de la somme d'une grandeur fonctionnelle normalisée et d'une valeur de réglage, cette valeur de réglage étant déterminée en fonction de la valeur de pondération.

8. Procédé conforme à l'une des revendications 5 et 6, selon lequel la grandeur fonctionnelle (z) est représentative du produit de la grandeur fonctionnelle normalisée et de la valeur de réglage.

9. Procédé conforme à l'une des revendications 5 et 8, selon lequel la fonction de distribution (f_x) est représentée par l'équation suivante :

$$f(x) = 1 - (1 - x)^z$$

   dans laquelle
   x représente la disponibilité d'énergie normalisée,
   f(x) représente la puissance maximum libérée normalisée,
   z représente la grandeur fonctionnelle.

10. Procédé conforme à l'une des revendications 1 à 3, selon lequel :

    - en tenant compte d'au moins une fonction de qualité et en fonction de la valeur de pondération on optimise la puissance maximum libérée qui doit être absorbée par le consommateur électrique du véhicule, et
    - en fonction de la puissance maximum libérée optimisée, on commande l'absorption de puissance du consommateur électrique.

11. Procédé conforme à l'une des revendications précédentes, selon lequel on détermine une limitation fonctionnelle du consommateur électrique et on la signale par des moyens optiques et/ou acoustiques et/ou haptiques.

12. Procédé conforme à l'une des revendications précédentes, selon lequel :

    - une consommation d'énergie supplémentaire et/ou diminuée est déterminée en comparaison avec la consommation d'énergie lorsque la puissance maximum libérée qui doit être absorbée par le consommateur électrique du véhicule est déterminée en fonction d'au moins une valeur de pondération de consigne prédéfinie, et
    - on signale la consommation d'énergie supplémentaire et/ou diminuée par des moyens opti-

**EP 2 571 728 B1**

ques et/ou acoustiques.

Figur 1

EP 2 571 728 B1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10211970 A1
- DE 3936638 C1

- EP 1103426 A